# EUROPÄISCHE PATENTSCHRIFT

(11) **EP 1 310 767 B1**
(45) Veröffentlichungstag und Bekanntmachung des Hinweises auf die Patenterteilung: **18.12.2013**
(21) Anmeldenummer: 02024228.5
(22) Anmeldetag: 31.10.2002
(51) Int. Cl.: G01C 21/36, G08G 1/0969, G09B 29/10

(54) **Verfahren zur Navigation mittels eines Navigationsgerätes und Navigationsgerät**
Navigation device and navigation method using the navigation device
Appareil de navigation et procédé de navigation utilisant cet appareil de navigation

(30) Priorität: 12.11.2001 DE 10155549
(43) Veröffentlichungstag der Anmeldung: 14.05.2003
(73) Patentinhaber: Harman/Becker Automotive Systems (XSYS Division) GmbH, 78050 Villingen-Schwenningen (DE)
(72) Erfinder: Cochlovius, Elmar, Dr., 78052 Villingen-Schwenningen (DE); Wagner, Oliver, 31134 Hildesheim (DE)
(74) Vertreter: Patentanwälte Westphal, Mussgnug & Partner

(56) Entgegenhaltungen:
- EP-A- 0 849 563
- EP-A- 0 897 169
- DE-A- 19 841 262
- US-A- 5 559 707
- US-B1- 6 178 380
- US-B1- 6 202 026
- PATENT ABSTRACTS OF JAPAN vol. 2000, no. 15, 6. April 2001 (2001-04-06) -& JP 2000 352927 A (HONDA MOTOR CO LTD), 19. Dezember 2000 (2000-12-19)

## Beschreibung

Die Erfindung betrifft ein Verfahren zur Navigation mittels eines Navigationsgerätes mit einem Speicher zur Speicherung von Straßenkartendaten, mit einem Navigationsrechner zur Berechnung von Fahrtrouten, mit einer Bedieneinheit zur Eingabe eines Startpunktes und eines Zieles, mit einem Bildschirm zur Laufdarstellung von Straßenkarten, mit einem Fadenkreuz zur Auswahl eines Zieles oder Zielgebietes und mit einer Lupenfunktion zur vergrößerten Darstellung eines auswählbaren Ausschnitts größeren Maßstabes einer Straßenkarte.

Die Erfindung betrifft weiter ein Navigationsgerät mit einem Speicher zur Speicherung von Straßenkartendaten, mit einem Navigationsrechner zur Berechnung von Fahrtrouten, mit einer Bedieneinheit zur Eingabe eines Startpunktes und eines Zieles, mit einem Bildschirm zur Laufdarstellung von Straßenkarten, mit einem Fadenkreuz zur Auswahl eines Zieles oder Zielgebietes und mit einer Lupenfunktion zur vergrößerten Darstellung eines mittels des Fadenkreuzes auswählbaren Ausschnitts größeren Maßstabes einer Straßenkarte.

Aus der JP 11-202125, der EP 0 897 169, der US 6,202,026 und der US5,559,707 sind Vorrichtung zum Darstellen von Straßenkarten für Navigationssysteme bekannt. Die JP 11-202125 beschreibt beispielsweise eine Vorrichtung zum Darstellen von Straßenkarten, bei der auf Knopfdruck ein vergrößerter Kartenausschnitt der eigentlichen Straßenkarte überlagert wird, so dass für den Benutzer der Eindruck entsteht, es würde eine Lupe zur Vergrößerung der Karte verwendet.

Bekannte Navigationsgeräte bieten dem Benutzer die Möglichkeit, auf einem Bildschirm eine Straßenkarte darzustellen und nach allen vier Haupthimmelsrichtungen N, S, O und W sowie nach allen vier Nebenhimmelsrichtungen NW, NO, SO und SW zu verschieben, was als Scrolling oder Scroll-Funktion bezeichnet wird. Mittels eines Fadenkreuzes kann der Benutzer einen Ausschnitt aus der auf dem Bildschirm gezeigten Straßenkarte auswählen, der dann bei Umschalten von der Scroll-Funktion auf die Zoomfunktion in vergrößertem Maßstab anstelle der zuvor gezeigten Straßenkarte auf dem Bildschirm dargestellt wird. Beim Aufsuchen eines Zieles auf der Straßenkarte und bei der Erstellung einer Fahrtroute ist aber häufiges Umschalten zwichen der Scroll-Funktion und der Zoomfunktion des Navigationsgerätes erforderlich, was nicht nur für den Benutzer umständlich, sondern auch sehr zeitraubend ist.

Es ist daher Aufgabe der Erfindung, ein Verfahren zur Navigation mittels eines Navigationsgerätes und ein Navigationsgerät so zu gestalten, dass die Bedienung für den Benutzer wesentlich vereinfacht und die zur Eingabe eines Navigationszieles erforderliche Zeit erheblich verkürzt wird.

Verfahrensmäßig wird diese Aufgabe mit den im Anspruch 1 angegebenen Merkmalen dadurch gelöst, dass im Speicher Straßenkartendaten von Straßenkarten größeren und kleineren Maßstabes gespeichert werden, dass mittels des Fadenkreuzes auf einer auf dem Bildschirm dargestellten Übersichtskarte kleineren Maßstabes ein Ausschnitt ausgewählt wird, der in vergrößertem Maßstab gleichzeitig mit der Übersichtskarte auf dem Bildschirm dargestellt wird.

Vorrichtungsmäßig wird diese Aufgabe mit den im Anspruch 4 angegebenen Merkmalen dadurch gelöst, dass im Speicher Straßenkartendaten von Straßenkarten größeren und kleineren Maßstabes gespeichert sind, dass mittels des Fadenkreuzes auf einer auf dem Bildschirm dargestellten Übersichtskarte kleineren Maßstabes ein Ausschnitt auswählbar ist, der in vergrößertem Maßstab gleichzeitig mit der Übersichtskarte auf dem Bildschirm darstellbar ist.

Das erfindungsgemäße Verfahren zur Navigation und das erfindungsgemäße Navigationsgerät sehen einen Speicher vor, in welchem Daten von Straßenkarten kleineren und größeren Maßstabes gespeichert werden. Mittels eines Navigationsrechners werden Fahrtrouten berechnet. Dem Bediener steht eine Bedieneinheit zur Bedienung des Navigationsgerätes zur Verfügung. Auf einem Bildschirm sind Straßenkarten darstellbar und nach allen acht Himmelsrichtungen verschiebbar. Mittels eines Fadenkreuzes kann der Bediener auf einer auf dem Bildschirm gezeigten Straßenkarte einen Ausschnitt auswählen und vergrößert mit einem größeren Maßstab auf dem Bildschirm darstellen. Erfindungsgemäß wird dieser ausgewählte Ausschnitt entweder lagerichtig in die auf dem Bildschirm gezeigte Straßenkarte eingeblendet oder in einem sogenannten Assistenzfenster über, unter oder neben der auf dem Bildschirm dargestellten Übersichtskarte gezeigt.

Wegen der erfindungsgemäßen Maßnahme, im Speicher Daten von Straßenkarten kleineren und größeren Maßstabes zu speichern, können gleichzeitig auf dem Bildschirm eine Übersichtskarte kleineren Maßstabes und ein vergrößerter Ausschnitt größeren Maßstabes dargestellt werden. Die zeitraubende und für den Bediener lästige Umschaltung zwischen der Scroll-Funktion und der Zoomfunktion ist nicht mehr erforderlich. Vielmehr kann der Bediener gleichzeitig auf dem Bildschirm die Übersichtskarte und den mittels der Lupenfunktion ausgewählten Ausschnitt betrachten. Außerdem lassen sich die Übersichtskarte und der Ausschnitt synchron miteinander nach allen acht Himmelsrichtungen verschieben, wobei der Lupenmittelpunkt zweckmäßigerweise deckungsgleich mit dem Ursprünglichen Fadenkreuzschnittpunkt ist. Es geht darum, den Schnittpunkt - und unmittelbar angrenzende Straßen - des " alten " Fadenkreuzes zeitgleich als zusätzliche Lupenansicht darzustellen und zwar entweder lagerichtig "auf" der Übersichtskarte oder separat im Assistenzfenster daneben.

Das erfindungsgemäße Navigationsgerät ist mit einem Speicher zur Speicherung von Straßenkartendaten von Straßenkarten größeren und kleineren Maßstabes und einem Navigationsrechner ausgerüstet, der Fahrtrouten berechnet. Die im Speicher gespeicherten Straßenkartendaten werden von einem Hauptrechner verarbeitet. Mittels einer Grafiksteuereinheit wird die gleichzeitige Darstellung einer Übersichtskarte kleineren Maßstabes und eines Ausschnittes größeren Maßstabes auf dem Bildschirm gesteuert. Die Grafiksteuereinheit, der Hauptrechner und der Speicher bilden eine Bildschirmsteuereinheit, die über einen Datenbus mit dem Navigationsrechner verbunden ist.

Erfindungsgemäß ist in der Bildschirmsteuereinheit ein Bildschirmspeicher vorgesehen, der in zwei Ebenen aufgeteilt ist. In der einen Ebene sind Straßenkartendaten für den anzuzeigenden Bereich der Übersichtskarte gespeichert, während in der anderen Ebene die Straßenkarten für den vergrößerten Ausschnitt abgelegt sind. Aus den in den beiden Ebenen des Bildschirmspeichers gespeicherten Straßenkartendaten erzeugt die Grafiksteuereinheit die Bilder auf dem Bildschirm.

Das erfindungsgemäße Verfahren und das erfindungsgemäße Navigationsgerät werden anhand der Figuren näher beschrieben und erläutert.

In der Zeichnung zeigen
- Figur 1: ein Blockschaltbild eines Ausführungsbeispiels eines erfindungsgemäßen Navigationsgerätes,
- Figur 2: ein Flußdiagramm eines Ausführungsbeispiels des erfindungsgemäßen Verfahrens,
- Figur 3: eine Darstellung einer Übersichtskarte mit einem Fadenkreuz gemäß dem Stand der Technik,
- Figur 4: eine Kartendarstellung auf dem Bildschirm gemäß der Erfindung mit einem lagerichtig in eine Übersichtskarte eingeblendeten vergrößerten Ausschnitt und
- Figur 5: eine erfindungsgemäße Darstellung einer Übersichtskarte und eines vergrößerten Ausschnitts in einem Assistenzfenster neben der Übersichtskarte.

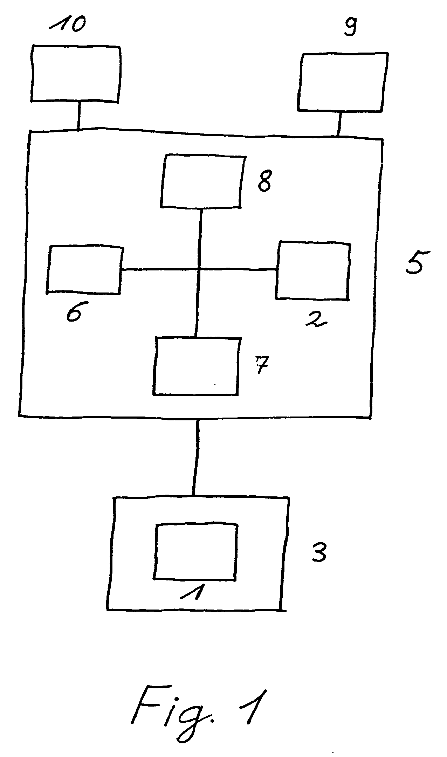

In der Figur 1 ist ein Blockschaltbild eines erfindungsgemäßen Navigationsgerätes abgebildet.

Eine Navigationseinheit 3 aus einem Navigationsrechner 1 ist über einen Datenbus 4 mit einer Bildschirmsteuereinheit 5 verbunden, an die ein Bildschirm 9 und eine Bedieneinheit 10 angeschlossen sind. In der Bildschirmsteuereinheit 5 sind ein Hauptrechner 6, ein Speicher 7, ein Bildschirmspeicher 2 und eine Grafiksteuereinheit 8 miteinander verbunden.

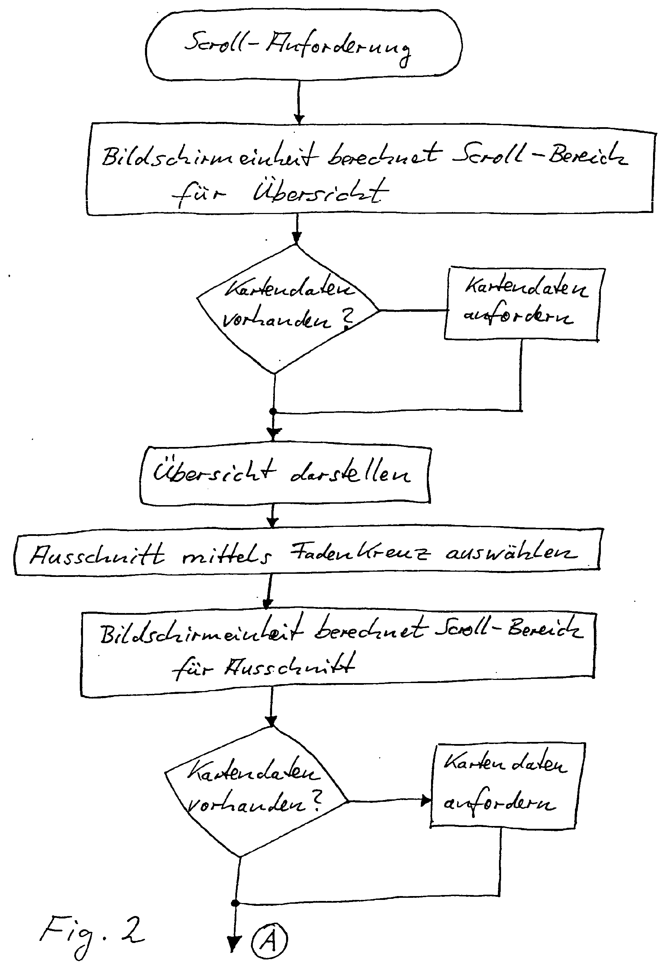

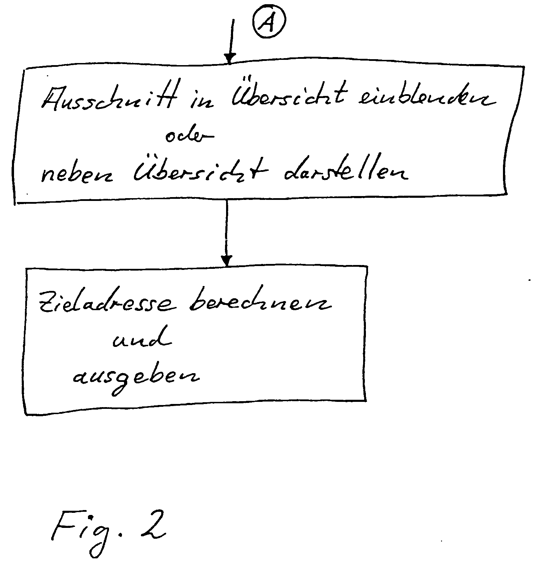

Anhand des in Figur 2 dargestellten Flußdiagramms wird die Funktion des in Figur 1 gezeigten Ausführungsbeispieles eines erfindungsgemäßen Navigationsgerätes erläutert.

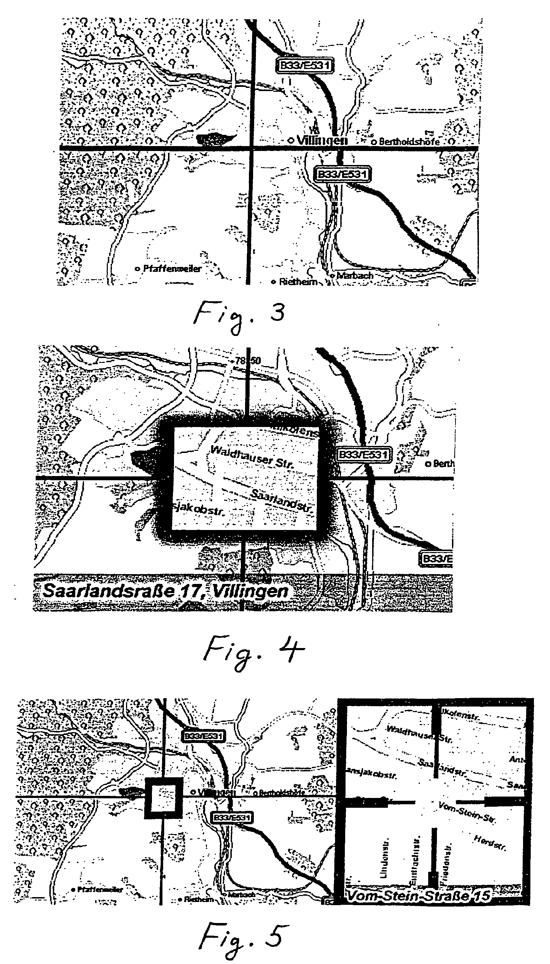

Nachdem der Bediener eine Übersichtskarte mittels der Bedieneinheit 10 angefordert hat, berechnet der Hauptrechner 6 der Bildschirmsteuereinheit 5 den auf dem Bildschirm 9 anzuzeigenden Bereich aus Daten, die er aus dem Speicher 7 der erhält. Nach Anzeige des angeforderten Bereiches auf dem Bildschirm 9 wählt der Bediener mittels eines Fadenkreuzes einen vergrößert darzustellenden Ausschnitt aus der Übersichtskarte aus. Der Hauptrechner 6 der Bildschirmsteuereinheit 5 berechnet aus im Speicher 7 der Bildschirmeinheit 5 stehenden Daten den vergrößert auf dem Bildschirm 9 darzustellenden Ausschnitt, der, wie in Figur 4 gezeigt, lagerichtig in die Übersichtskarte eingeblendet oder, wie in Figur 5 dargestellt, neben der Übersichtskarte in einem sogenannten Assistenzfenster gezeigt wird. Der im Assistenzfenster vergrößert wiedergegebene Ausschnitt aus der Übersichtskarte ist der Übersichtlichkeit wegen in der Übersichtskarte umrahmt. Mittels eines Fadenkreuzes oder der Bedieneinheit 10 kann der Bediener sowohl die Übersichtskarte als auch den vergrößerten Ausschnitt aus der Übersichtskarte beliebig nach oben, unten, rechts oder links, also nach allen acht Himmelsrichtungen, verschieben.

Der Navigationsrechner 1 der Navigationseinheit 3 berechnet die von einem vom Bediener mittels der Bedieneinheit 10 eingegebenen Startpunkt zu einem ebenfalls mittels der Bedieneinheit 10 eingegebenen Zielpunkt führende Fahrtroute, die auf dem Bildschirm 9 dargestellt wird. Der Bildschirmspeicher 2 ist erfindungsgemäß in zwei Ebenen aufgeteilt. In der einen Ebene werden die Straßenkartendaten für den anzuzeigenden Bereich der Übersichtskarte gespeichert, während in der anderen Ebene die Straßenkartendaten für den vergrößerten Ausschnitt abgelegt werden. Aus den im Bildschirmspeicher 2 gespeicherten Straßenkartendaten erzeugt die Grafiksteuereinheit 8 die auf dem Bildschirm 9 darzustellenden Bilder.

Auf diese Weise läßt sich jede beliebige von einem Startpunkt zu einem Zielpunkt führende Fahrtroute, die nach vorgebbaren Kriterien optimiert werden kann, berechnen und auf dem Bildschirm anzeigen, ohne dass hierzu ständig zwischen der Scrollund der Lupenfunktion umgeschaltet wird, weil sowohl die Übersichtskarte als auch der vergrößerte Ausschnitt gleichzeitig auf dem Bildschirm angezeigt werden. Das erfindungsgemäße Navigationsgerät zeichnet sich daher durch eine einfache Bedienung und schnelle Berechnung und Anzeige der Fahrtrouten aus.

### Bezugszeichenliste

- 1: Navigationsrechner
- 2: Bildschirmspeicher
- 3: Navigationseinheit
- 4: Datenbus
- 5: Bildschirmsteuereinheit
- 6: Hauptrechner
- 7: Speicher
- 8: Grafiksteuereinheit
- 9: Bildschirm
- 10: Bedieneinheit

## Patentansprüche

1. Verfahren zur Navigation mittels eines Navigationsgerätes mit einem Speicher (7) zur Speicherung von Straßenkartendaten, mit einem Navigationsrechner (1) zur Berechnung von Fahrtrouten, mit einer Bedieneinheit (10) zur Eingabe eines Startpunktes und eines Zieles, mit einem Bildschirm (9) zur Laufdarstellung von Straßenkarten, mit einem Fadenkreuz zur Auswahl eines Zieles oder Zielgebietes und mit einer Lupenfunktion zur vergrößerten Darstellung eines mittels des Fadenkreuzes auswählbaren Ausschnitts größeren Maßstabes einer Straßenkarte, wobei im Speicher (7) Straßenkartendaten von Straßenkarten größeren und kleineren Maßstabes gespeichert werden, dass mittels des Fadenkreuzes auf einer auf dem Bildschirm (9) dargestellten Übersichtskarte kleineren Maßstabes ein Ausschnitt ausgewählt wird, der in vergrößertem Maßstab gleichzeitig mit der Übersichtskarte auf dem Bildschirm (9) dargestellt wird, **dadurch gekennzeichnet,**
- **dass** eine Bildschirmsteuereinheit (5) mit dem Speicher (7), einem Hauptrechner (6) und einer Grafiksteuereinheit (8) vorgesehen wird, dass der Hauptrechner (6) den auf dem Bildschirm (9) darzustellenden Bereich der Übersichtskarte und anschließend den ausgewählten Ausschnitt berechnet, dass der berechnete Bereich der Übersichtskarte und des Ausschnitts gleichzeitig auf dem Bildschirm (9) dargestellt werden und dass der berechnete Bereich der Übersichtskarte und des Ausschnitts mittels der Grafiksteuereinheit (8) synchron miteinander auf dem Bildschirm (9) verschiebbar sind, und
- **dass** ein Bildschirmspeicher (2) vorgesehen wird, der in zwei Ebenen aufgeteilt wird, wobei in der einen Ebene die Straßenkartendaten für den anzuzeigenden Bereich der Übersichtskarte und in der anderen Ebene die Straßenkartendaten für den vergrößerten Ausschnitt gespeichert werden, und dass die Grafiksteuereinheit (8) aus den im Bildschirmspeicter (2) gespeicherten Straβenkartendaten die Bilder auf den Bildschirm (9) erzeugt.

2. Verfahren nach Anspruch 1,
**dadurch gekennzeichnet , dass** der vergrößerte Ausschnitt lagerichtig in die Übersichtskarte auf dem Bildschirm (9) eingeblendet wird.

3. Verfahren nach Anspruch 1,
**dadurch gekennzeichnet, dass** der vergrößerte Ausschnitt in einem so genannten Assistenzfenster neben, über oder unter der Übersichtskarte auf dem Bildschirm (9) dargestellt wird.

4. Navigationsgerät mit einem Speicher (7) zur Speicherung von Straßenkartendaten, mit einem Navigationsrechner (1) zur Berechnung von Fahrtrouten, mit einer Bedieneinheit (10) zur Eingabe eines Startpunktes und eines Zieles, mit einem Bildschirm (9) zur Laufdarstellung von Straßenkarten, mit einem Fadenkreuz zur Auswahl eines Zieles oder Zielgebietes und mit einer Lupenfunktion zur vergrößerten Darstellung eines mittels des Fadenkreuzes auswählbaren Ausschnitts größeren Maßstabes einer Straßenkarte, wobei im Speicher (7) Straßenkartendaten von Straßenkarten gröβeren und kleineren Maßstabes gespeichert sind, dass mittels des Fadenkreuzes auf einer auf dem Bildschirm dargestellten Übersichtskartekleineren Maßstabes ein Ausschnitt auswählbar ist, der in vergrößertem Maßstab gleichzeitig mit der Übersichtskarte auf dem Bildschirm (9) darstellbar ist, **dadurch gekennzeichnet,**
- **dass** eine Bildschirmsteuereinheit (5) mit dem Speicher (7), einem Hauptrechner (6) und einer Grafiksteuereinheit (8) vorgesehen ist, dass mittels des Hauptrechners (6) der auf dem Bildschirm (9) darzustellende Bereich der Übersichtskarte und anschließend des ausgewählten Ausschnitts berechenbar ist, dass der berechnete Bereich der Übersichtskarte und des auswählbaren Ausschnitts gleichzeitig auf dem Bildschirm darstellbar sind und dass der berechnete Bereich der Übersichtskarte und des auswählbaren Ausschnitts mittels der Grafiksteuereinheit (8) synchron miteinander auf dem Bildschirm verschiebbar sind, und
- **dass** ein Bildschirmspeicher (2) vorgesehen ist, der in zwei Ebenen aufgeteilt ist, wobei in der einen Ebene die Straßenkartendaten für den anzuzeigenden Bereich der Übersichtskarte und in der anderen Ebene die Straßenkartendaten für den vergrößerten Ausschnitt gespeichert sind, und dass mittels der Grafiksteuereinheit (8) aus den im Bildschirmspeicher (2) gespeicherten Straßenkartendaten die Bilder auf dem Bildschirm (9) erzeugbar sind.

5. Navigationsgerät nach Anspruch 4,
**dadurch gekennzeichnet, dass** der vergrößerte Ausschnitt lagerichtig in die Übersichtskarte auf dem Bildschirm (9) einblendbar ist.

6. Navigationsgerät nach Anspruch 4,
**dadurch gekennzeichnet, dass** der vergrößerte Ausschnitt in einem so genannten Assistenzfenster neben, über oder unter der Übersichtskarte auf dem Bildschirm (9) darstellbar ist.

7. Navigationsgerät nach einem der Ansprüche 4 bis 6,
**dadurch gekennzeichnet, dass** die Bildschirmsteuereinheit (5) mit dem Bildschirm (9) und der Bedieneinheit (10) verbunden ist und dass die Bildschirmsteuereinheit (5) über einen Datenbus (4) mit einer Navigationseinheit (3) verbunden ist, die mit dem Navigationsrechner (1) ausgerüstet ist.

## Claims

1. A method for navigating using a navigation device comprising a memory (7) for storing road map data, a navigation processor (1) for calculating driving routes, an operating unit (10) for entering a starting point and a destination, a screen (9) for scrolling road maps, cross hairs for selecting a destination or destination area, and a magnifying function for displaying, in an enlarged manner, a larger-scale section of a road map that can be selected by way of the cross hairs, road map data from larger-scale and smaller-scale road maps being stored in the memory (7), and a section, which is displayed on the screen (9) on an enlarged scale at the same time as the general map, being selected by way of the cross hairs on a smaller-scale general map displayed on the screen (9), **characterized in that**
- a screen control unit (5) having a memory (7), a main processor (6), and a graphic control unit (8) is being provided, the main processor (6) calculates the area of the general map to be displayed on the screen (9) and then the selected section, the calculated area of the general map and the section are displayed simultaneously on the screen (9), and the calculated area of the general map and the section can be moved synchronously with each other on the screen (9) by way of the graphic control unit (8); and
- a screen memory (2) is provided, which is divided into two levels, road map data for the area of the general map to be displayed being stored in one level and the road map data for the enlarged section being stored in the other level, and the graphic control unit (8) generates the images on the screen (9) from the road map data stored in screen memory (2).

2. The method according to claim 1,
**characterized in that** the enlarged section is superimposed in correct positional arrangement on the general map on the screen (9).

3. The method according to claim 1, **characterized in that** the enlarged section is displayed in a so-called help window next to, above, or beneath the general map on the screen (9).

4. A navigation device comprising a memory (7) for storing road map data, a navigation processor (1) for calculating driving routes, an operating unit (10) for entering a starting point and a destination, a screen (9) for scrolling road maps, cross hairs for selecting a destination or destination area, and a magnifying function for displaying, in an enlarged manner, a larger-scale section of a road map that can be selected by way of the cross hairs, road map data from larger-scale and smaller-scale road maps being stored in the memory (7), and a section, which is displayed on the screen (9) on an enlarged scale at the same time as the general map, being selectable by way of the cross hairs on a smaller-scale general map displayed on the screen (9),
**characterized in that**
- a screen control unit (5) having a memory (7), a main processor (6), and a graphic control unit (8) is provided, the main processor (6) can calculate the area of the general map to be displayed on the screen (9) and then the selected section, the calculated area of the general map and the section can be displayed simultaneously on the screen (9), and the calculated area of the general map and of the section can be moved synchronously with each other on the screen (9) by way of the graphic control unit (8); and
- a screen memory (2) is provided, which is divided into two levels, road map data for the area of the general map to be displayed being stored in one level and the road map data for the enlarged section being stored in the other level, and the graphic control unit (8) can generate the images on the screen (9) from the road map data stored in the screen memory (2).

5. The navigation device according to claim 4,
**characterized in that** the enlarged section can be superimposed in correct positional arrangement on the general map on the screen (9).

6. The navigation device according to claim 4,
**characterized in that** the enlarged section can be displayed in a so-called help window next to, above, or beneath the general map on the screen (9).

7. A navigation device according to any one of claims 4 to 6,
**characterized in that** the screen control unit (5) is connected to the screen (9) and the operating unit (10), and the screen control unit (5) is connected via a data bus (4) to a navigation unit (3) that is equipped with the navigation processor (1).

## Revendications

1. Procédé de navigation utilisant un dispositif de navigation comprenant une mémoire (7) permettant d'enregistrer des données relatives à une carte routière, un processeur de navigation (1) permettant de calculer des itinéraires, une unité d'opération (10) permettant d'entrer un point de départ et une destination, un écran (9) permettant de faire défiler des cartes routières, un réticule permettant de sélectionner une destination ou une zone de destination et une fonction de grossissement permettant d'afficher, de manière agrandie, une partie de plus grande échelle d'une carte routière qu'on peut choisir grâce au réticule, les données de carte routière provenant des cartes routières de plus grande et de plus petite échelle étant enregistrées dans la mémoire (7), et une partie, qui est affichée à l'écran (9) à une échelle agrandie au même moment que la carte générale, étant sélectionnée grâce au réticule sur une carte générale de plus petite échelle affichée sur l'écran (9), **caractérisé en ce que**
- une unité de commande d'écran (5) contenant une mémoire (7), un processeur principal (6) et une unité de commande graphique (8) est prévue, le processeur principal (6) calcule la surface de la carte générale à afficher à l'écran (9) puis la partie sélectionnée, les surfaces calculées de la carte générale et la section sont affichées simultanément à l'écran (9) et la surface calculée de la carte générale et de la partie peuvent être déplacées de manière synchrone l'une par rapport à l'autre à l'écran (9) grâce à l'unité de commande graphique (8) ; et
- une mémoire d'écran (2) est prévue, qui se divise en deux niveaux, des données de carte routière pour la zone de la carte générale à afficher étant enregistrées dans un niveau, et les données de carte routière pour la section agrandie étant enregistrées dans l'autre niveau, et l'unité de commande graphique (8) produit les images à l'écran (9) à partir des données de carte routière enregistrées dans la mémoire d'écran (2).

2. Procédé selon la revendication 1,
**caractérisé en ce que** la section agrandie est superposée selon une configuration correcte en termes de position sur la carte générale à l'écran (9).

3. Procédé selon la revendication 1, **caractérisé en ce que** la section agrandie est affichée dans ce qu'on appelle une fenêtre d'aide située à côté ou au-dessus ou au-dessous de la carte générale à l'écran (9).

4. Dispositif de navigation comprenant une mémoire (7) permettant d'enregistrer des données relatives à une carte routière, un processeur de navigation (1) permettant de calculer des itinéraires, une unité d'opération (10) permettant d'entrer un point de départ et une destination, un écran (9) permettant de faire défiler des cartes routières, un réticule permettant de sélectionner une destination ou une zone de destination et une fonction de grossissement permettant d'afficher, de manière agrandie, une partie de plus grande échelle d'une carte routière qu'on peut choisir grâce au réticule, les données de carte routière provenant des cartes routières de plus grande et de plus petite échelle étant enregistrées dans la mémoire (7), et une partie, qui est affichée à l'écran (9) à une échelle agrandie au même moment que la carte générale, étant sélectionnée grâce au réticule sur une carte générale de plus petite échelle affichée sur l'écran (9), **caractérisé en ce que**
- une unité de commande d'écran (5) contenant une mémoire (7), un processeur principal (6) et une unité de commande graphique (8) est prévue, le processeur principal (6) peut calculer la surface de la carte générale à afficher à l'écran (9) puis la partie sélectionnée, les surfaces calculées de la carte générale et la section peuvent être affichées simultanément à l'écran (9) et la surface calculée de la carte générale et de la partie peuvent être déplacées de manière synchrone l'une par rapport à l'autre à l'écran (9) grâce à l'unité de commande graphique (8) ; et
- une mémoire d'écran (2) est prévue, qui se divise en deux niveaux, des données de carte routière pour la zone de la carte générale à afficher étant enregistrées dans un niveau, et les données de carte routière pour la section agrandie étant enregistrées dans l'autre niveau, et l'unité de commande graphique (8) peut produire les images à l'écran (9) à partir des données de carte routière enregistrées dans la mémoire d'écran (2).

5. Dispositif de navigation selon la revendication 4,
**caractérisé en ce que** la section agrandie peut être superposée selon une configuration correcte en termes de position sur la carte générale à l'écran (9).

6. Dispositif de navigation selon la revendication 4,
**caractérisé en ce que** la section agrandie peut être affichée dans ce qu'on appelle une fenêtre d'aide située à côté ou au-dessus ou au-dessous de la carte générale à l'écran (9).

7. Dispositif de navigation selon la revendication 4 ou 6,
**caractérisé en ce que** l'unité de commande d'écran (5) est reliée à l'écran (9) et **en ce que** l'unité d'opération (10) et l'unité de commande d'écran (5) sont reliées par le biais d'un bus de données (4) à une unité de navigation (3) qui est équipée du processeur de navigation (1).
